# EUROPEAN PATENT SPECIFICATION

(11) **EP 3 350 063 B1**
(45) Date of publication and mention of the grant of the patent: **24.02.2021**
(21) Application number: 16767228.6
(22) Date of filing: 15.09.2016
(51) Int. Cl.: B62D 25/02, B62D 25/20, B62D 29/04

(54) **AUTOMOTIVE BODY SHELL**
AUTOKAROSSERIE
COQUE DE CARROSSERIE D'AUTOMOBILE

(30) Priority: 15.09.2015 CH 13412015
(43) Date of publication of application: 25.07.2018
(73) Proprietor: Mubea Carbo Tech GmbH, 5020 Salzburg (AT)
(72) Inventor: AST, Günther, 72181 Starzach (DE); SCHMITZ, Sebastian, 5020 Salzburg (AT)
(74) Representative: Rentsch Partner AG
(86) International application number: PCT/EP2016/071783
(87) International publication number: WO 2017/046217

(56) References cited:
- EP-B1- 0 812 282
- DE-A1-102008 036 175
- DE-A1-102013 214 782
- DE-U1-202008 015 394
- JP-A- H0 596 238
- JP-A- S5 863 579
- US-A1- 2014 265 443
- US-A1- 2015 137 561

## Description

### FIELD OF THE INVENTION

The invention relates to an automotive body shell comprising a composite underbody component being made of fibre reinforced plastic material, namely carbon-fibre-reinforced plastic material (CFRP) and rocker panels connected to the composite underbody component at outer sides thereof. The invention also relates to a method for producing such an automotive body shell.

### BACKGROUND OF THE INVENTION

Such an automotive body shell structure is known from DE10 2008 036 175 A1.

WO 2011/128081 A1 was published on 20 October 2011 in the name of Roding Automobile GmbH. It describes an automobile body shell with a very stiff passenger cell having a floor part made from carbon-fibre-reinforced plastic material. The floor part is provided with lateral rocker panels which are adhesively bonded to the side skirt sections of the floor part to increase the stiffness during impact. The rocker panels are made from carbon-fibre-reinforced plastic material. One problem is that said structure is not appropriate for large scale production and the thereto related test procedures.

### SUMMARY OF THE INVENTION

It is a object of the invention to provide an automobile body shell which is suitable for cost-saving mass production. This object is achieved by the subject-matter of the independent claims.

An embodiment of the automobile body shell comprises at least one rocker panel which is at least partially made of ductile material, preferably of metallic material, such as steel and/or aluminium and/or a similar material. Alternatively or in addition the rocker panels can be filled with energy absorbing material such as a energy absorbing foam. Thereby a stiff load bearing passenger cell arranged at the inside is combined with at least one rocker panel forming part of a crush zone for absorbing deformation energy. By the invention described herein a body shell comprising the above mentioned energy absorbing elements is suitable to be integrated in large scale mass production.

Carbon-fibre-reinforced plastic material has a higher strength, a lower elongation at break and thereby a higher bending and torsional stiffness can be achieved compared to most metallic materials including steel and aluminium that are commonly used for automobile body shells. On the other hand, a very high stiffness may be of disadvantage in view of crash situations where kinetic impact energy has to be absorbed, e.g. by deformation energy. By using ductile material, e.g. such as metallic material, for the rocker panels and non-ductile material, such as carbon-fibre-reinforced plastic material, at least for certain load bearing parts of the underbody component, the automobile body shell can be optimized in both respects, namely in obtaining a stiff passenger cell in combination with rocker panels which can more effectively deform under impact forces. The deformation is thereby concentrated in the rocker panels whereas the composite underbody component keeps almost undeformed up to a certain level. Under normal conditions, the rocker panels can form part of the load bearing structure.

Accordingly, for an automobile body shell having a stiff load bearing passenger cell and a crush zone, it is preferred to use a composite underbody component made at least partially of carbon-fibre-reinforced plastic material as a stiffening part of the passenger cell and the rocker panels as a part of the crush zone. On the other hand, if the underbody structure of the passenger cell and the rocker panels are both made from metallic material, as this is actually most common in the art, the passenger cell may suffer considerable deformations in crash situations unless it is significantly reinforced.

The difference is considerable: for example, an Euro NCAP polecrash with 29km/h produces 90mm less deformation of the passenger cell if a composite underbody component according to the invention is used compared to a common underbody structure made from metallic material. The invention accordingly ensures more passenger survival space what course also applies for front or rear impacts if there are metallic crushing elements provided as well.

An automobile body shell according to the invention comprises an underbody component being made of fibre-reinforced plastic material, and at least one rocker panel interconnected to the underbody component at outer sides thereof, extending in longitudinal direction of the underbody component. The at least one rocker panel is in transversal direction (transverse to the driving direction) designed in a more deformable manner (compared to the underbody component) such that impact energy occurring in said lateral direction is absorbed by deformation of the rocker panels. The rocker panels are mechanically interconnected to the underbody component. They preferably form part of the load bearing structure of the automobile body shell and thereby contribute to the stiffness of the overall structure, i.e. the automobile body shell. The underbody component normally comprises at least one crossmember extending in transversal direction foreseen to receive the load in transversal direction and distribute it within the structure of the underbody component. Good results may be achieved if the at least one crossmember is mechanically interconnected to the at least one rocker panel. If appropriate the rocker panels arranged on each side of the underbody component can be interconnected to each other via the front and/or the back of the underbody component. The fibre-reinforced plastic material of the underbody component preferably comprises carbon fibres and/or kevlar fibres and/or glass fibres and/or metallic fibres and/or natural fibres. The at least one rocker panel may comprise an outer shell. Very good results may be achieved if the outer shell is at least partially made of ductile sheet metal and/or composite material. Depending on the field of application the outer shell may comprise several layers of sheet metal and/or composite material. In a preferred variation the outer shell of the at least one rocker panel has in transversal direction an in principle C-shaped cross-section. The outer shell of the at least one rocker panel may have in transversal direction a multi-cell cross-section. The outer shell of the at least one rocker panel may comprise at least one drainage, e.g. in the form of one or several holes or openings. If appropriate the drainage can be closed after production. The at least one rocker panel may comprise foam material and/or honeycomb for absorbing impact energy during impact. The foam material and/or honeycomb material is preferably arranged between the underbody component and an outer shell of the at least one rocker panel. The foam material and/or honeycomb material may at least during impact form at least one support between the underbody component and an outer shell of the at least one rocker panel.

In an embodiment of the invention the composite underbody component at least essentially extends over the area of the passenger cell. It is even preferred that the composite underbody component does at least not essentially extend beyond the area of the passenger cell in the horizontal direction and not beyond the hight of the middle tunnel in the vertical direction. Thereby the composite underbody component is a somewhat large part that can replace several tens of metallic parts that are assembled in common BIW metallic structures for building up the floor panel of the passenger cell. The effort for assembling the several tens of parts is saved of course as well. On the other hand, the composite underbody component of the invention is small enough that it can be produced in a simple form by a RTM process. The composite underbody component may even be in one piece and/or may be free of cavities and/or may be free of undercuts. This allows to use a high/speed low cost RTM injection process and cost effective/high speed prefom and resin technologies. The preform may be preassembled in one or only a pieces as well.

In a preferred variation of the invention the composite underbody component is primarily made of a carbon-fibre-reinforced plastic material (CFRP) produced by a RTM process. It is free of cavities and at least almost free of undercuts so that it can be molded as a monolithic piece in one step in a two-part or at least a three-part form. If appropriate the mold may comprise one or several sliders in the case that an undercut needs to be formed.

In metallic constructions critical tolerances can only be achieved after the assembly of their parts by machining. Components in carbon-fibre-reinforced plastic material do have much less tolerances and lower variation, thus reducing the necessary amount of post-machining. This is in particular the case if the composite underbody component is in one piece.

All this, separately or in combination, renders the automotive body shell as described herein suitable for an even automated large scale production. The increased precision and higher automation helps to compensate price differences between carbon-fibre-reinforced plastic material and traditional metallic materials. Other than in monocoque designs where the passenger cabin is completely or at least predominantly made in one piece from carbon-fibre-reinforced plastic material, the composite underbody component of the invention can be designed suitable for use in existing standardized production lines being actually adapted for processing metallic parts.

By automotive body shell according to the invention made from a combination of fibre reinforced material on the inside and ductile rocker panels on the outside, in comparison with even light metallic materials a considerable reduction in weight and a significant increase in safety may be realized. For example, just for the floor part of the passenger cell an advantage in weight of about 30 kg (50%) can be obtained in comparison with a conventional steel construction, wherein this percentage even increases above average with increasing demands in the stiffness of the passenger cell.

Further in comparison with metallic materials, the higher stiffness of the composite underbody component and the passenger cell as a whole also provides a higher introduction rigidity towards vibrational exitations at the connections points to the movable vehicle components resulting in an enhanced noise comfort.

Depending on the field of application, the underbody component has a trough shaped structure comprising at least one crossmember extending in a transversal direction and a bottom. Alternatively or in addition the underbody component may comprise at least one crossmember extending in longitudinal direction. The at least one crossmember preferably has an open cross section which during production in a forming tool may be demolded from the top and/or from the bottom in vertical direction, i.e. which does not comprise any hindering untercut. Good results may be achieved if the at least one crossmember is forming a tunnel in the lengthwise and/or transversal direction. A crosswise arrangement of several crossmembers results in a high stability and low weight of the underbody component. For automobiles provided with an electric drive the underbody component may be provided with at least one trough shaped structure for receiving a battery pack. This trough could be closed by a covering part also made form carbon-fibre-reinforced plastic material. Embedded in such a trough the battery pack would be well protected against damages by deformation in crash situations.

Carbon-fibre-reinforced plastic material behave like relatively precious metals due to the electrochemical properties of the carbon. This has so far limited the application of carbon-fibre-reinforced plastic material in automotive applications because metallic parts in contact with such material may undergo strong corrosion in a short time. If required, the invention solves this problem by providing a layer of insulating material between connection faces of a composite underbody component and a rocker panels made from ductile metal at which connection faces composite underbody component and the rocker panels are connected to each other. The layer provides a galvanic isolation between the carbon-fibre-reinforced plastic material of the composite underbody component and the metallic material of the rocker panels. This may as well apply to other metallic parts which are connected to the composite underbody component such as front end side rails, a bulkhead, a front seat cross member, a rear seat cross member and/or A, B and/or C pillar inners.

An underbody component made from fibre reinforced plastic material in combination with rocker panel according to the invention normally comprises one or several first connection faces arranged in sequence or parallel to each other along an outer edge of the underbody component.

Depending on the field of application, the fibre-reinforced plastic material of the underbody component may comprise carbon fibres and/or glass fibres and/or metallic fibres and/or natural fibres or a combination thereof.

According to the state of the art automobile body shells or so called Bodies in White are treated after their assembly in a cathodic dip painting process. The fibre-reinforced plastic material used for the composite underbody component therefore has the property to withstand such a cathodic dip painting process with a temperature of least 180°C during at least 30 min. In addition, the carbon-fibre-reinforced plastic material shall not contaminate the ingredients of the cathodic bath.

As well according to the state of the art various parts of automobile body shells or so called Bodies in White are connected to each other by adhesive bonding techniques. In view of that, in a further preferred embodiment, the layer providing the galvanic isolation is an adhesive material which also provides an adhesive bond between the composite underbody component and the rocker panels. Thereby the one layer provides a advantageously a function.

Adhesives used for automobile body shells usually achieve their final bonding strength by curing at elevated temperatures. The adhesive used for the insolating layer preferably obtains its final bonding strength under the temperature conditions that prevail in the above mentioned cathodic dip painting process. The adhesive may be a structural adhesive which is a heat cured (at 180°C), fracture-toughened epoxy adhesive and which is capable of bonding oily galvanized steel. At least for handling the automobile body shell prior to the cathodic dip painting, i.e. as long the adhesive is not yet cured, the composite underbody component and the at least one rocker panel may be attached to each other by mechanical means. Possible techniques include punch riveting and/or high speed joining and/or steel flow forming screws and/or clips. In case of a greater thermal extension of the metallic material of the rocker panels in comparison to the fibre-reinforced plastic material of the underbody component, beads may be foreseen in the rocker panels along the connection faces in particular between the possible mechanical fixation positions.

In view of the above described galvanic isolation by providing a isolating layer the between mutual faces of the composite underbody component and the rocker panels, a method for producing an automobile body shell according to the invention is characterized by the following steps:
- providing a composite underbody component made from carbon-fibre-reinforced plastic material by a RTM procedure having first connection faces;
- providing rocker panels made from a ductile material, e.g. metallic material, having second connection faces;
- applying a layer of an adhesive material to a least one of the first or second connection faces;
- bringing the first connection faces of the composite underbody component in contact with the second connection faces of the rocker panels;
- at least temporarily fixing the first and second connection faces in contact with each other by mechanical fixation means; and
- causing the adhesive material o develop an adhesive bond in a dip painting process.

It is to be understood that both the foregoing general description and the following detailed description present embodiments, and are intended to provide an overview or framework for understanding the nature and character of the disclosure. The accompanying drawings are included to pro-vide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings which should not be considered limiting to the invention described in the appended claims. The drawings are showing:
- Fig. 1: a perspective view of an automotive body shell comprising a composite underbody component and rocker panels according to the present invention.
- Fig. 2: a perspective view on the upper side of the composite underbody component with the rocker panels and some other parts connected therewith;
- Fig. 3: a perspective view on the lower side of the composite underbody component with the rocker panels and some other parts connected there-with.
- Fig. 4: a plan view on the composite underbody component with the rocker panels and some other parts connected therewith.
- Fig. 5: a sectional view (D-D in Fig. 4)
- Fig. 6: shows detail E of Fig. 5.
- Fig. 7: an exploded perspective view of the composite underbody component, the rocker panels and some other parts separately.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

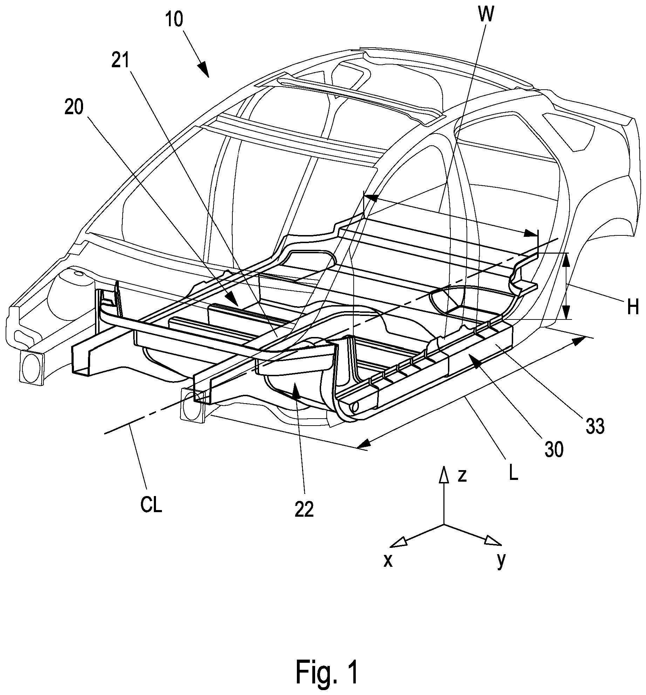

Referring now to the accompanying drawings wherein like reference numerals denote like elements through the various views, one exemplary embodiment of an automobile body shell is shown in **Figure 1** having a passenger cell 10. The automobile body shell according to the invention includes an underbody component 20 and two rocker panels 30 laterally interconnected thereto.

The underbody component 20 is in the shown variation symmetrically shaped with regard to a plane (extending in the x-z-directions) along centre line CL and includes a tunnel 21 in the form of an inverted channel longitudinally extending between a front end wall structure 22 and a rear end wall structure 23. If present, the middle tunnel 21 can be foreseen to receive a drive shaft. Alternatively or in addition, the tunnel 21 can be foreseen to receive a battery, e.g. in case of an electric drive.

A first and a second cross member 24, 25 extend transversely between the tunnel 21 and lateral side wall structures 26 to which the rocker panels 30 are interconnected as described herein. The first and the second crossmembers 24, 25 are having an open cross-section facing downward such that they can easily be demolded during production. Other shapes are possible. The first and the second crossmembers 24, 25 serve among others as reinforcing rails in the transverse direction avoiding unwanted deformation (collapse) of the underbody component e.g. during side impact. The underbody component furthermore comprises a bottom 35 which extends between the side wall structures 26 and if present, the crossmembers 24, 25, respectively the tunnel 21, if present.

Interconnected to the side wall structures 26 are rocker panels 30, commonly also referred to a "rocker outer", which extend longitudinally (x-direction, respectively driving direction) almost in parallel to the tunnel 21 along the side walls 26. In the drawings further parts are visible, which are interconnected with the underbody component 20. Among others, two front end side rails 40, a bulkhead 50, at least one faceplate 60, a rear seat cross member 70, and a rear seatback member 80 are visible. As it can be seen the front end side rails 40 extend into the bottom 35 of the underbody component 20. At least one faceplate 60 can be foreseen to form a closed box-like structure to increase stability and stiffness of the overall structure 20.

As can be seen from **Figure 1****,** the underbody component 20 of the shown variation essentially extends over the area of the passenger cell 10 in the horizontal direction but does not essentially extend beyond the area of the passenger cell 10 in this direction. In the vertical direction the composite underbody component 20 does not essentially extend beyond the height of the middle tunnel. Depending on the field of application the length L of the composite underbody component 20 in the x-direction is typically between 2000 - 2500 mm, whereas the width W in the y-direction is between 1300 - 1600 mm. Its hight H is between 150 - 500 mm. Other dimensions are possible.

The composite underbody component 20 is preferably made of one or several composite materials, e.g. carbon-fibre-reinforced plastic material (CFRP), and is produced by a RTM process. For easy production it should be kept free of cavities and undercuts which can not be demolded. Thereby it can be molded as a monolithic piece with high precision in one step in a two-part or at least a three-part mold. If required, one or several inserts can be placed in the mold before curing of the composite material.

Rocker panels 30 as shown here are made of a ductile material by deep drawing, e.g. by deep drawing of sheet metal such as steel and/or aluminium. The sheet metal of the rocker panels 30 is forming a shell 33 having an in principle C-shaped cross section. If required, patches or tapes (both not shown in detail) of composite material can be applied locally or over the whole shell 33 for specific reinforcement. This may as well be the case for the other mentioned parts 40 - 90.

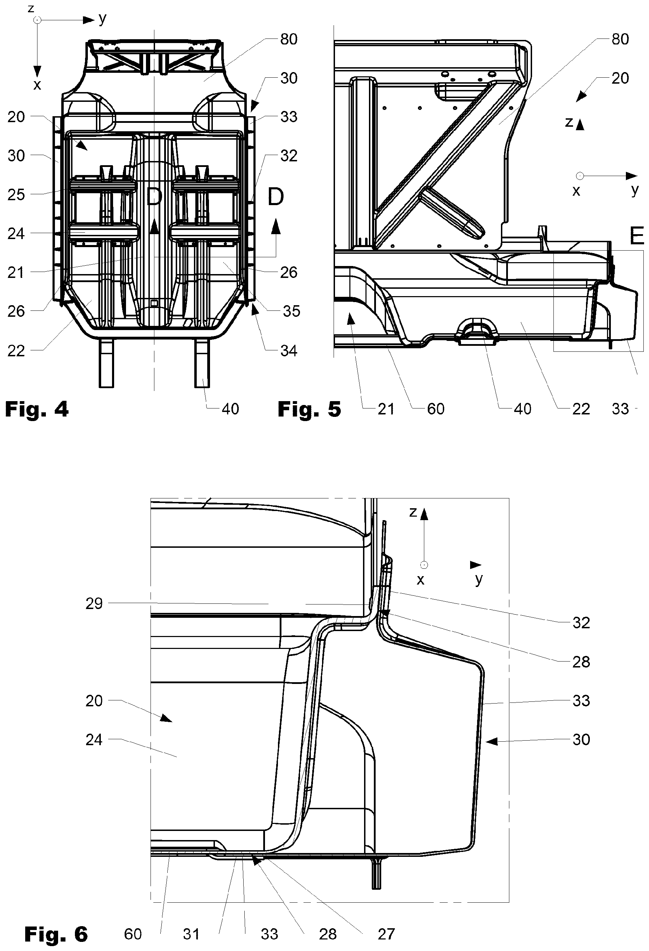

The underbody component 20 is provided, at least in the area of its side wall structures 26 but preferably all around its circumference with one or several first connection faces 27 arranged in sequence or parallel to each other. Corresponding second connection faces 31 are provided at least the rocker panels 30. **Figure 5** and **Figure 6** in more detail show how connection faces 27 and 31 are connected to each other. Between the connection faces 27, 31 there is provided a layer 28 as this is shown in **Figure 5** and in more detail in **Figure 6****.** A layer 28 provides a galvanic isolation between the carbon-fibre-reinforced plastic material of the composite underbody component 20 and the metallic material of the rocker panels 30. It may have a thickness of 3/10 - 7/10 mm. Layer 28 is an adhesive layer in addition which provides an adhesive bond between the respective connection faces 27 and 31. At least temporary fixation is achieved by mechanical fixation means such as rivet 29 shown in **Figures 5** and **6** are provided at distinct locations to at least temporarily connect the underbody component 20 and the rocker panels 30 prior to the adhesive of layer obtaining its final bonding strength by temperature curing for example.

For compensating different thermal extension e.g. of the carbon-fibre-reinforced plastic material of the underbody component 20 on the one hand and metallic material of the rocker panels 30 on the other hand, the rocker panels may be provided with beads 32. The beads 32 can be arranged between the mechanical connection points, if present. With regard to the interconnection between the underbody component 20 and the other parts 40 - 90, that what has been described with respect to the galvanic isolation, the adhesive bonding, the at least provisional mechanical connection and the thermal extension, may also apply to such other parts.

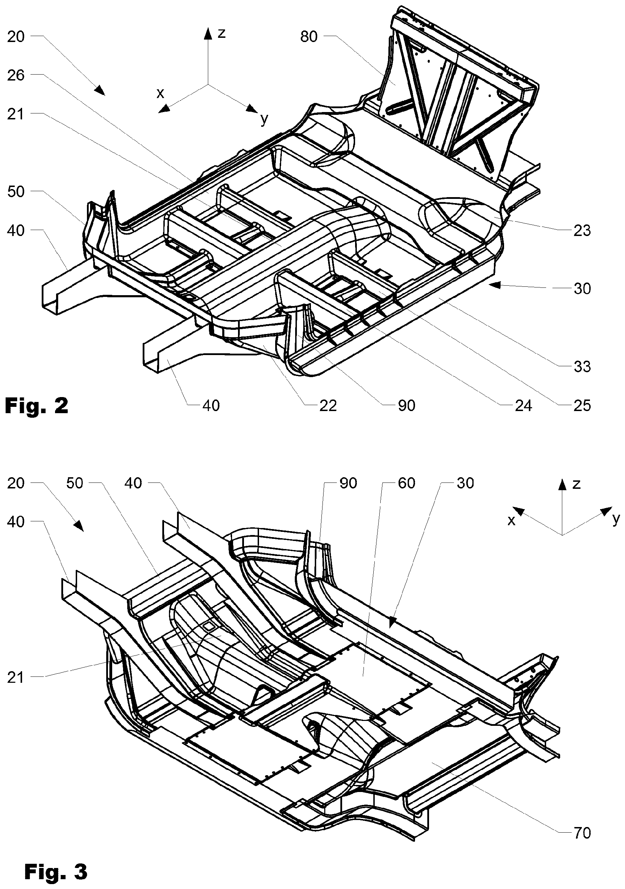

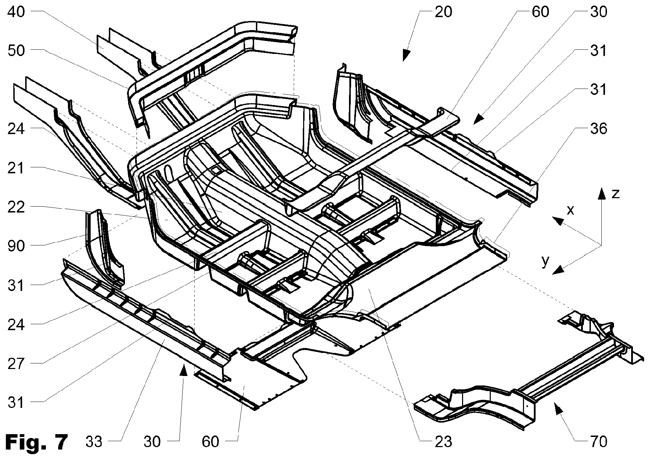

**Figure 7** is showing the underbody component 20 and the rocker panels 30 according to the **Figures 1** through **6****,** as well as other parts in an exploded manner in a perspective view. Assembly directions are schematically indicated by dotted lines). The underbody component 20 is preferably made of fibre-reinforced plastic material. At least one rocker panel 30 is interconnected to the underbody component at outer sides thereof, extending in longitudinal direction of the underbody component.

The rocker panels 30 are in transversal direction (y-direction, transverse to the driving direction x) constructed in a more deformable manner compared to the underbody component 20 such that deformation energy occurring in said lateral direction during impact is absorbed primarily by deformation of the rocker panels 30. The rocker panels 30 are mechanically interconnected to the underbody component 20 by first and second faces 27, 31. They preferably form part of the load bearing structure of the automobile body shell 10 and thereby contribute to the stiffness of the overall structure, i.e. the automobile body shell 10.

The underbody component 20 normally comprises at least one crossmember 24, 25 which extend in transversal direction (y-direction) foreseen to receive at least part of the load in transversal direction and distribute it within the structure of the underbody component 20. Good results may be achieved if, as shown here, the at least one crossmember 24, 25 is mechanically interconnected to the at least one rocker panel 30 in a mounted position.

The rocker panels 30 of the shown variation comprise an outer shell 33. Very good results may be achieved if the outer shell is at least partially made of ductile sheet metal and/or composite material. Depending on the field of application the outer shell may comprise several layers of sheet metal and/or composite material. In a preferred variation the outer shell of the at least one rocker panel has in transversal direction an in principle a C-shaped cross-section. The outer shell 33 may comprise at least one drainage, e.g. in the form of one or several holes or openings. If appropriate the drainage can be closed after production. The rocker panels may comprise foam material and/or honeycomb for absorbing impact energy during impact. The foam material and/or honeycomb material is preferably arranged between the underbody component and an outer shell of the at least one rocker panel. The foam material and/or honeycomb material may at least during impact form at least one support between the underbody component and an outer shell of the at least one rocker panel. An underbody component 20 made from fibre reinforced plastic material in combination with rocker panel according to the invention normally comprises one or several first connection faces 27 arranged in sequence or parallel to each other adjacent an outer edge of the underbody component 20. In **Figure 7** this is indicated by a dashed line 36. The first connection faces 27 are foreseen to interconnect the underbody component not only to one or several rocker panels, but also to other parts of the automobile body shell, respectively the passenger cell 10.

### LIST OF DESIGNATIONS

| | | | |
|---|---|---|---|
| 10 | Automobile body shell / passenger cell | 33 | (Outer) Shell |
| 20 | underbody component | 34 | Opening / Drainage |
| 21 | Tunnel | 35 | Bottom |
| 22 | Front end wall structure | 36 | Dashed line |
| 23 | Rear end wall structure | 40 | Frontend side rails |
| 24 | First crossmember (inverted transverse channel) | 50 | Bulkhead |
| 25 | Second crossmember (inverted transverse channel) | 60 | Faceplate |
| 26 | Side wall structures | 70 | Rear cross member |
| 27 | First connection faces | 80 | Rear seatback member |
| 28 | Galvanic isolation and adhesive layer | 90 | A pillar inner |
| 29 | Mechanical connection means | CL | Center line |
| 30 | Rocker panel | L | Length |
| 31 | Second connection face | W | Width |
| 32 | Beads | H | Height |
| | | x, y,z | directions |

## Claims

1. Automobile body shell (10) comprising:
a. an underbody component (20) being made of fibre-reinforced plastic material, and
b. at least one rocker panel (30) interconnected to the underbody component (20) at an outer side thereof, extending in longitudinal direction (x) of the underbody component (20), wherein
c. the at least one rocker panel (30) is in a transversal direction (y) designed in a more deformable manner compared to the underbody component (20), such that impact energy occurring in the lateral direction (y) is absorbed by deformation of the rocker panel (30),
d. the underbody component (20) is at least partially made from fibre-reinforced plastic material by an RTM procedure and has first connection faces (27),
e. the rocker panels (30) are at least partially made from a metallic material having second connection faces (31), and
f. the second connection facces (31) of the rocker panels (30) are adhesively bonded to the first connection faces (27) of the underbody component (20) by a layer of an adhesive material (28).

2. Automobile body shell according to claim 1, **wherein** the composite underbody component (20) comprises at least one crossmember (24) extending in transversal direction (y).

3. Automobile body shell according to claim 2, **wherein** the at least one crossmember (24) is mechanically interconnected to at least one rocker panel (30).

4. Automobile body shell according to one of the previous claims, **wherein** the fibre-reinforced plastic material of the underbody component (20) comprises carbon fibres and/or Kevlar fibres and/or glass fibres and/or metallic fibres and/or natural fibres.

5. Automobile body shell according to one of the previous claims, **wherein** the at least one rocker panel (30) comprises an outer shell (33).

6. Automobile body shell according to claim 5, **wherein** the outer shell (33) is at least partially made of ductile sheet metal and/or composite material.

7. Automobile body shell according to claim 6, **wherein** the outer shell (33) comprises several layers of sheet metal and/or composite material.

8. Automobile body shell according to any one of claims 5 to 7, **wherein** the outer shell (33) of the at least one rocker panel (30) has in transversal direction (y) an in principle C-shaped cross-section and/or a multi-cell cross-section.

9. Automobile body shell according to any one of claims 5 to 8, **wherein** the outer shell (33) of the at least one rocker panel (30) comprises at least one drainage.

10. Automobile body shell according to one of the previous claims, **wherein** the at least one rocker panel (30) comprises foam material and/or honeycomb material for absorbing impact energy during impact.

11. Automobile body shell according to claim 10, **wherein** the foam material and/or honeycomb material is arranged between the underbody component and an outer shell (33) of the at least one rocker panel (30).

12. Automobile body shell according to claim 11, **wherein** the foam material and/or honeycomb material forms at least one support between a side structure (26) of the underbody component (20) and an outer shell (33) of the at least one rocker panel (30).

13. Automobile body shell according to one of the previous claims, **wherein** the composite underbody component (20) essentially extends over the area of the passenger cell (10).

14. Automobile body shell according to one of the previous claims, **wherein** the underbody component (20) comprises at least one tunnel (21) extending in the lengthwise direction (x).

15. Automobile body shell according to one of the previous claims, **wherein** the composite underbody component (20) has at least one trough shaped structure for receiving a battery pack of an electric drive.

16. Automobile body shell according to any one of the previous claims, **wherein** a layer (28) of insulating material is provided between connection faces (27, 31) of the underbody component (20) and the rocker panels (30) at which connection faces (27, 31) composite underbody component (20) and the rocker panels (30) are connected to each other and which layer (28) provides a galvanic isolation between the carbon-fibre-reinforced plastic material of the composite underbody component (20) and the metallic material of the rocker panels (30) and is the adhesive material which provides the adhesive bond between the composite underbody component (20) and the rocker panels (30).

17. Automobile body shell according to claim 16, **wherein** the composite underbody component (20) and rocker panels (30) are also mechanically connected to each other.

18. Automobile body shell according to one of the previous claims, **wherein** the reinforced plastic material used for the composite underbody component (20) withstands a cathodic dip painting process with a temperature of least 190°C during at least 30 min.

19. Method for producing an automobile body shell (10) according to one of the previous claims, **comprising** the following steps:
a. providing a underbody component (20) made from fibre-reinforced plastic material by an RTM procedure having first connection faces (26);
b. providing rocker panels (30) made from a metallic material having second connection faces (31);
c. applying a layer of an adhesive material (28) to a least one of the first or second connection faces;
d. bringing the first connection faces (27) of the composite underbody component (20) in contact with the second connection faces (31) of the rocker panels (30);
e. at least temporarily fixing the first and second connection faces (27, 31) in contact with each other by mechanical fixation means (28); and
f. causing the adhesive material to develop an adhesive bond in a cathodic dip painting process.

## Patentansprüche

1. Automobil-Rohkarosserie (10), die Folgendes umfasst:
a. eine Unterbodenkomponente (20), die aus faserverstärktem Kunststoffmaterial hergestellt ist, und
b. wenigstens einen Schweller (30), der an einer äußeren Seite derselben mit der Unterbodenkomponente (20) verbunden ist, wobei er sich in einer Längsrichtung (x) der Unterbodenkomponente (20) erstreckt, wobei
c. der wenigstens eine Schweller (30) in einer Querrichtung (y) auf eine, verglichen mit der Unterbodenkomponente (20), verformbareren Weise gestaltet ist, so dass Aufprallenergie, die in der seitlichen Richtung (y) aufritt, durch eine Verformung des Schwellers (30) absorbiert wird,
d. die Unterbodenkomponente (20) wenigstens teilweise durch ein RTM-Verfahren aus faserverstärktem Kunststoffmaterial hergestellt ist und erste Verbindungsflächen (27) aufweist,
e. die Schweller (30) wenigstens teilweise aus einem metallischen Material hergestellt sind, wobei sie zweite Verbindungsflächen (31) aufweisen, und
f. die zweiten Verbindungsflächen (31) der Schweller (30) durch eine Lage eines klebenden Materials (28) klebend an die ersten Verbindungsflächen (27) der Unterbodenkomponente (20) gebunden sind.

2. Automobil-Rohkarosserie nach Anspruch 1, wobei die Verbund-Unterbodenkomponente (20) wenigstens einen Querträger (24) umfasst, der sich in einer Querrichtung (y) erstreckt.

3. Automobil-Rohkarosserie nach Anspruch 2, wobei der wenigstens eine Querträger (24) mechanisch mit dem wenigstens einen Schweller (30) verbunden ist.

4. Automobil-Rohkarosserie nach einem der vorhergehenden Ansprüche, wobei das faserverstärkte Kunststoffmaterial der Unterbodenkomponente (20) Kohlenstofffasern und/oder Kevlarfasern und/oder Glasfasern und/oder metallische Fasern und/oder natürliche Fasern umfasst.

5. Automobil-Rohkarosserie nach einem der vorhergehenden Ansprüche, wobei der wenigstens eine Schweller (30) eine äußere Schale (33) umfasst.

6. Automobil-Rohkarosserie nach Anspruch 5, wobei die äußere Schale (33) wenigstens teilweise aus verformbarem Metallblech und/oder Verbundwerkstoff hergestellt ist.

7. Automobil-Rohkarosserie nach Anspruch 6, wobei die äußere Schale (33) mehrere Lagen von Metallblech und/oder Verbundwerkstoff umfasst.

8. Automobil-Rohkarosserie nach einem der Ansprüche 5 bis 7, wobei die äußere Schale (33) des wenigstens einen Schwellers (30) in einer Querrichtung (y) einen im Prinzip C-förmigen Querschnitt und/oder einen mehrzelligen Querschnitt aufweist.

9. Automobil-Rohkarosserie nach einem der Ansprüche 5 bis 8, wobei die äußere Schale (33) des wenigstens einen Schwellers (30) wenigstens eine Drainage umfasst.

10. Automobil-Rohkarosserie nach einem der vorhergehenden Ansprüche, wobei der wenigstens eine Schweller (30) Schaumstoffmaterial und/oder Wabenmaterial zum Absorbieren von Aufprallenergie während eines Aufpralls umfasst.

11. Automobil-Rohkarosserie nach Anspruch 10, wobei das Schaumstoffmaterial und/oder Wabenmaterial zwischen der Unterbodenkomponente und einer äußeren Schale (33) des wenigstens einen Schwellers (30) angeordnet ist.

12. Automobil-Rohkarosserie nach Anspruch 11, wobei das Schaumstoffmaterial und/oder Wabenmaterial wenigstens eine Stütze zwischen einer Seitenstruktur (26) der Unterbodenkomponente (20) und einer äußeren Schale (33) des wenigstens einen Schwellers (30) bildet.

13. Automobil-Rohkarosserie nach einem der vorhergehenden Ansprüche, wobei sich die Unterbodenkomponente (20) im Wesentlichen über den Bereich der Fahrgastzelle (10) erstreckt.

14. Automobil-Rohkarosserie nach einem der vorhergehenden Ansprüche, wobei die Unterbodenkomponente (20) wenigstens einen Tunnel (21) umfasst, der sich in der Längsrichtung (x) erstreckt.

15. Automobil-Rohkarosserie nach einem der vorhergehenden Ansprüche, wobei die Verbund-Unterbodenkomponente (20) wenigstens eine muldenförmige Struktur zum Aufnehmen eines Batteriepakets eines elektrischen Antriebs aufweist.

16. Automobil-Rohkarosserie nach einem der vorhergehenden Ansprüche, wobei eine Lage (28) eines isolierenden Materials zwischen Verbindungsflächen (27, 31) der Unterbodenkomponente (20) und der Schweller (30) bereitgestellt wird, wobei an den Verbindungsflächen (27, 31) die Verbund-Unterbodenkomponente (20) und die Schweller (30) miteinander verbunden sind, und die Lage (28) eine galvanische Isolierung zwischen dem kohlenstofffaserverstärkten Kunststoffmaterial der Verbund-Unterbodenkomponente (20) und dem metallischen Material der Schweller (30) bereitstellt und das klebende Material ist, das die klebende Bindung zwischen der Verbund-Unterbodenkomponente (20) und den Schwellern (30) bereitstellt.

17. Automobil-Rohkarosserie nach Anspruch 16, wobei die Verbund-Unterbodenkomponente (20) und die Schweller (30) ebenfalls mechanisch miteinander verbunden sind.

18. Automobil-Rohkarosserie nach einem der vorhergehenden Ansprüche, wobei das verstärkte Kunststoffmaterial, das für die Verbund-Unterbodenkomponente (20) verwendet wird, einem kathodischen Tauchlackierungsvorgang mit einer Temperatur von wenigstens 190 °C während wenigstens 30 min standhält.

19. Verfahren zum Herstellen einer Automobil-Rohkarosserie (10) nach einem der vorhergehenden Ansprüche, das die folgenden Schritte umfasst:
a. Bereitstellen einer Unterbodenkomponente (20), die durch ein RTM-Verfahren aus faserverstärktem Kunststoffmaterial hergestellt ist, wobei sie erste Verbindungsflächen (27) aufweist,
b. Bereitstellen von Schwellern (30), die aus einem metallischen Material hergestellt sind, wobei sie zweite Verbindungsflächen (31) aufweisen,
c. Aufbringen einer Lage eines klebenden Materials (28) auf wenigstens eine von den ersten oder den zweiten Verbindungsflächen,
d. Bringen der ersten Verbindungsflächen (27) der Verbund-Unterbodenkomponente (20) in Berührung mit den zweiten Verbindungsflächen (31) der Schweller (30),
e. wenigstens zeitweiliges Fixieren der ersten und der zweiten Verbindungsflächen (27, 31) in Berührung miteinander durch mechanische Fixierungsmittel (28) und
f. Veranlassen, dass das klebende Material in einem kathodischen Tauchlackierungsvorgang eine klebende Bindung entwickelt.

## Revendications

1. Coque de carrosserie automobile (10) comprenant:
a. un composant de dessous de caisse (20) en matière plastique renforcée de fibres, et
b. au moins un seuil de porte (30) interconnecté au composant de dessous de caisse (20) sur un côté extérieur de celui-ci, s'étendant dans la direction longitudinale (x) du composant de soubassement (20), dans lequel
c. au moins un seuil de porte (30) est dans une direction transversale (y) conçu de manière plus déformable par rapport au composant de dessous de caisse (20), de sorte que l'énergie d'impact se produisant dans la direction latérale (y) soit absorbée par la déformation du seuil de porte (30),
d. le composant de dessous de caisse (20) est au moins partiellement fabriqué en matière plastique renforcée de fibres par une procédure RTM et présente des premières faces de raccordement (27),
e. les seuils de porte (30) sont au moins partiellement fabriqués en un matériau métallique ayant des secondes faces de raccordement (31), et
f. les secondes faces de raccordement (31) des seuils de porte (30) sont reliées adhésivement aux premières faces de raccordement (27) du composant de dessous de caisse (20) par une couche d'un matériau adhésif (28).

2. Coque de carrosserie automobile selon la revendication 1, dans laquelle le composant de dessous de caisse composite (20) comprend au moins une traverse (24) s'étendant dans la direction transversale (y).

3. Coque de carrosserie automobile selon la revendication 2, dans laquelle la au moins une traverse (24) est reliée mécaniquement à au moins un seuil de porte (30).

4. Coque de carrosserie automobile selon une des revendications précédentes, dans laquelle la matière plastique renforcée de fibres du composant de dessous de caisse (20) comprend des fibres de carbone et/ou des fibres de Kevlar et/ou des fibres de verre et/ou des fibres métalliques et/ou des fibres naturelles.

5. Coque de carrosserie automobile selon une des revendications précédentes, dans laquelle le au moins un seuil de porte (30) comprend une coque externe (33).

6. Coque de carrosserie automobile selon la revendication 5, dans laquelle la coque externe (33) est au moins partiellement en tôle ductile et/ou en matériau composite.

7. Coque de carrosserie automobile selon la revendication 6, dans laquelle la coque externe (33) comprend plusieurs couches de tôle et/ou de matériau composite.

8. Coque de carrosserie automobile selon une quelconque des revendications 5 à 7, dans laquelle la coque externe (33) du au moins un seuil de porte (30) présente dans la direction transversale (y) une section transversale en principe en forme de C et/ou une section transversale multicellulaire.

9. Coque de carrosserie automobile selon une quelconque des revendications 5 à 8, dans laquelle la coque externe (33) du au moins un seuil de porte (30) comprend au moins un drainage.

10. Coque de carrosserie automobile selon une des revendications précédentes, dans laquelle le au moins un seuil de porte (30) comprend un matériau en mousse et/ou en nid d'abeille pour absorber l'énergie d'impact lors de l'impact.

11. Coque de carrosserie d'automobile selon la revendication 10, dans laquelle le matériau en mousse et/ou le matériau en nid d'abeille est disposé entre le composant de soubassement et une coque extérieure (33) de le au moins un seuil de porte (30).

12. Coque de carrosserie automobile selon la revendication 11, dans laquelle le matériau en mousse et/ou matériau en nid d'abeille forme au moins un support entre une structure latérale (26) du composant de dessous de caisse (20) et une coque extérieure (33) de le au moins un seuil de porte (30).

13. Coque de carrosserie automobile selon une des revendications précédentes, dans laquelle le composant de dessous de caissecomposite (20) s'étend essentiellement sur la zone de l'habitacle (10).

14. Coque de carrosserie automobile selon une des revendications précédentes, dans laquelle le composant de dessous de caisse (20) comprend au moins un tunnel (21) s'étendant dans le sens de la longueur (x).

15. Coque de carrosserie automobile selon une des revendications précédentes, dans laquelle le composant de dessous de caissecomposite (20) a au moins une structure en forme d'auge pour recevoir un bloc-batterie d'un entraînement électrique.

16. Coque de carrosserie automobile selon une quelconque des revendications précédentes, dans laquelle une couche (28) de matériau isolant est prévue entre les faces de raccordement (27, 31) du composant de dessous de caisse (20) et des seuils de porte (30), sur lesquelles faces de raccordement (27, 31) le composant de dessous de caisse composite (20) et les seuils de porte (30) sont reliées entre elles et laquelle couche (28) offre une isolation galvanique entre la matière plastique renforcée de fibres de carbone du composant de dessous de caisse composite (20) et le matériau métallique des seuils de porte (30) et est le matériau adhésif qui assure la liaison adhésive entre le composant de dessous de caisse composite (20) et les seuils de porte (30).

17. Coque de carrosserie automobile selon la revendication 16, dans laquelle le composant de dessous de caise composite (20) et les seuils de porte (30) sont également reliés mécaniquement l'un à l'autre.

18. Coque de carrosserie automobile selon une des revendications précédentes, dans laquelle la matière plastique renforcée utilisée pour le composant de dessous de caisse composite (20) résiste à un processus de peinture par immersion cathodique avec une température d'au moins 190°C pendant au moins 30 min.

19. Procédé de fabrication d'une coque de carrosserie automobile (10) selon une des revendications précédentes, comprenant les étapes suivantes:
a. fournir un composant de dessous de caisse (20) fait d'une matière plastique renforcée par des fibres par une procédure RTM et ayant des premières faces de raccordement (27);
b. fournir des seuils de porte (30) faits d'un matériau métallique et ayant des secondes faces de raccordement (31);
c. appliquer une couche d'un matériau adhésif (28) sur au moins une des première ou seconde faces de raccordement;
d. amener les premières faces de raccordement (27) du composant de dessous de caissecomposite (20) en contact avec les secondes faces de raccordement (31) des seuils de porte (30);
e. fixer au moins temporairement les première et seconde faces de raccordement (27, 31) en contact l'une avec l'autre par des moyens de fixation mécanique (28); et
f. amener le matériau adhésif à développer une liaison adhésive dans un processus de peinture par immersion cathodique.
